# EUROPÄISCHE PATENTANMELDUNG

(11) **EP 4 388 841 A1**
(43) Veröffentlichungstag der Anmeldung: **26.06.2024**
(21) Anmeldenummer: 23210788.8
(22) Anmeldetag: 20.11.2023
(51) Int. Cl.: A01B 69/04, B60T 8/17

(54) **VERFAHREN ZUR BREMSSTEUERUNG EINER FAHRZEUGKOMBINATION UND BREMSSTEUERSYSTEM ZUM BETREIBEN DIESES VERFAHRENS**

(30) Priorität: 19.12.2022 DE 102022213831
(71) Anmelder: ZF CV Systems Global GmbH, 3006 Bern (CH)
(72) Erfinder: Hauschild, Tobias, 30926 Seelze (DE); Kemmerling, Matthias, 38110 Braunschweig (DE)
(74) Vertreter: ZF Friedrichshafen AG

(57) **Zusammenfassung**

Die Erfindung betrifft ein Verfahren zur Bremssteuerung einer Fahrzeugkombination (1), welche ein Zugfahrzeug (2) und ein an das Zugfahrzeug angekoppeltes Anbaugerät (3) oder wenigstens ein Anhängefahrzeug umfasst, wobei die Fahrzeugkombination ein elektronisches Bremssteuersystem (4) mit ersten Sensormitteln (12a, 12b, 13a, 13b) zur Ermittlung der Fahrgeschwindigkeit aufweist, wobei zumindest das Zugfahrzeug eine durch das Bremssteuersystem ansteuerbare Reibungsbremsanlage (14) aufweist, und wobei zumindest das angekoppelte Anbaugerät (3) oder Anhängefahrzeug als Teil des Bremssteuersystems zweite Sensormittel (26) zur Erkennung eines Abbremsbedarfs der Fahrzeugkombination und zur Signalisierung einer Abbremsanforderung aufweist. Hierbei ist gemäß der Erfindung vorgesehen, dass eine signalisierte Abbremsanforderung direkt oder indirekt an das Bremssteuersystem (4) übermittelt wird, und dass die Fahrzeugkombination (1) durch das Bremssteuersystem auf eine an das Bremssteuersystem übermittelte Abbremsanforderung hin mittels einer Ansteuerung mindestens der Reibungsbremsanlage (14) des Zugfahrzeugs (2) automatisch abgebremst wird.

## Beschreibung

Die Erfindung betrifft ein Verfahren zur Bremssteuerung einer Fahrzeugkombination, welche ein Zugfahrzeug und ein an das Zugfahrzeug angekoppeltes Anbaugerät oder wenigstens ein Anhängefahrzeug umfasst, wobei die Fahrzeugkombination ein elektronisches Bremssteuersystem sowie erste Sensormittel zur Ermittlung der Fahrgeschwindigkeit aufweist, wobei zumindest das Zugfahrzeug eine durch das Bremssteuersystem ansteuerbare Reibungsbremsanlage aufweist, und wobei zumindest das angekoppelte Anbaugerät oder Anhängefahrzeug zweite Sensormittel zur Erkennung eines Abbremsbedarfs der Fahrzeugkombination und zur Signalisierung einer Abbremsanforderung aufweist. Außerdem betrifft die Erfindung ein elektronisches Bremssteuersystem einer Fahrzeugkombination mit einem Zugfahrzeug und einem an das Zugfahrzeug ankoppelbaren Anbaugerät oder Anhängefahrzeug, sowie eine solche Fahrzeugkombination.

Off-Highway-Fahrzeuge, wie landwirtschaftliche Traktoren oder andere Zugfahrzeuge, sind häufig abseits von Straßen unterwegs. Sie verrichten beispielsweise landwirtschaftliche Arbeiten auf Feldern oder erledigen Aufgaben auf Baustellen und öffentlichen Flächen mit aufgabenspezifischen Anbaugeräten oder Anhängefahrzeugen, welche an ein solches Zugfahrzeug gekoppelt sind. Die Sensoren und/oder Steuergeräte von vielen auf dem Markt befindlichen Anbaugeräten oder Anhängefahrzeugen sind bereits in der Lage, über eine genormte elektronische Bus-Schnittstelle mit einem Steuergerät des Zugfahrzeugs zu kommunizieren. Bei modernen Fahrzeugkombinationen kann das Zugfahrzeug bereits dynamische Steuerbefehle von einem Anbaugerät oder Anhängefahrzeug empfangen, beispielsweise zur Einstellung einer optimalen Fahrgeschwindigkeit für eine bestimmte Aufgabe oder Anbauposition. Derartige Fahrzeugkombinationen besitzen zunehmend hochentwickelte, elektronisch steuerbare Antriebssysteme, um die Bewegung der Fahrzeugkombination zu steuern und gegebenenfalls zu regeln. Dies kann beispielsweise durch die Steuerung des Übersetzungsverhältnisses eines stufenlosen Getriebes im Antriebsstrang zusammen mit der Steuerung des Antriebsmotors erfolgen. Die Reibungsbremsen und Feststellbremsen, welche in allen Off-Highway-Fahrzeugen benötigt werden, um eine vorgeschriebene Verzögerung des Fahrzeugs sowohl während der Fahrt auf der Straße als auch auf dem Feld sicher zu erreichen, können vom Fahrer manuell betätigt werden.

Die Kommunikation zwischen einem landwirtschaftlichen Zugfahrzeug und einem daran angekoppelten Anbaugerät oder Anhängefahrzeug wird von der Stiftung für Elektronik in der Landwirtschaft AEF (Agricultural Industry Electronics Foundation) unter dem Begriff Traktor-Geräte-Management TIM (Tractor Implement Management) zusammen mit der ISOBUS-Norm ISO 11783 für landwirtschaftliche Anwendungen ständig weiterentwickelt (Internet: www.aef-online.org/de/ueber-uns/activities/tractor-implement-management-tim.html). Bei TIM handelt es sich demnach um eine produkt- und herstellerübergreifende Liste von Funktionen in der Landtechnikindustrie, bei denen ein Anbaugerät mit einem Traktor bidirektional elektronisch kommunizieren kann, um bestimmte Traktorfunktionen, beispielsweise die Fahrgeschwindigkeit, zu steuern, wobei das Anbaugerät seinen Betrieb selbst durch Steuerbefehle an den Traktor optimiert. Als physikalische Schnittstelle wird dafür die mit der Norm ISO 11783 konforme landtechnische Datenbusanwendung ISOBUS eingesetzt. ISOBUS ermöglicht die Steuerung von Anbaugeräten verschiedener Art und verschiedener Hersteller mit einem vorhandenen Endgerät, wobei die Kommunikation auf dem Netzwerkprotokoll SAE J1939 beruht, welches die Kommunikation auf einem CAN-Bus in Nutzfahrzeugen zur Übermittlung von Diagnosedaten und Steuerungsinformationen definiert.

Ein Abbremsbedarf zum Abbremsen der Fahrzeugkombination kann aufgrund von Arbeitsabläufen in einem Normalbetrieb oder beim Erkennen einer Gefahrensituation entstehen. Im Feld, Wald oder Gelände können Gefahrensituationen auftreten, die sich von Situationen, welche man auf der Straße antrifft, gänzlich unterscheiden. Neben den bekannten Funktionen der Kollisionsvermeidung oder des Fußgängerschutzes während der Fahrt auf der Straße erfordern andere Ereignisse während des Einsatzes eines Anbaugerätes oder Anhängefahrzeugs das Anhalten der Fahrzeugkombination. Solche Situationen sind beispielsweise die Anwesenheit von Tieren unter der Erntefläche während der Ernte, eine mögliche Kollision eines breiten Anbaugeräts mit Feldhindernissen, wie Zäunen oder Strommasten, oder Gegenstände, die möglicherweise erhebliche Schäden am Gerät verursachen können, wie Steine oder Metallschrott. Das Anbaugerät oder Anhängefahrzeug muss solche Situationen selbst erkennen können und ist dafür mit geeigneten Sensoren ausgestattet, welche für die jeweilige Anwendung optimiert sind. Das Anbaugerät oder Anhängefahrzeug signalisiert in diesen Fällen einen Abbremsbefehl beispielsweise über die ISOBUS-Schnittstelle an ein Steuergerät des Zugfahrzeugs.

Allerdings wurden bisher nur solche Funktionen in das Traktor-Geräte-Management TIM implementiert, welche im Falle eines Abbremsbefehls des Anbaugeräts oder Anhängefahrzeugs lediglich eine relativ gemäßigte Verzögerung der Fahrgeschwindigkeit erfordern, welche meistens mittels des Antriebsstrangs durch Drosseln des Antriebsmotors und/oder Ändern der Getriebeübersetzung eines im Antriebsstrang vorhandenen Getriebes erreicht werden kann. Beispielsweise kann derart ein Wechsel zwischen Vorwärtsfahrt und Rückwärtsfahrt automatisch gesteuert werden. Die Verzögerungssteuerung über das Fahrzeuggetriebe ist bei Nutzung des Traktor-Geräte-Managements TIM zudem nur mit einem stufenlosen Getriebe vorgesehen, nicht jedoch bei Fahrzeugen mit einem Lastschaltgetriebe, welche in derartigen Fahrzeugkombination noch weit verbreitet sind.

Da die Möglichkeiten des Antriebsstrangs zur Verzögerung der Fahrzeugkombination begrenzt sind, muss der Fahrer immer selbst in der Lage sein, die Reibungsbremsen zumindest des Zugfahrzeugs zu betätigen, um eine geeignete Verzögerung zu erreichen und die Sicherheit in allen Fahrsituationen zu gewährleisten. Die Reaktion des Fahrers nach einer für ihn sichtbaren und/oder hörbaren Warnung eines Anbaugeräts könnte in einer kritischen Situation jedoch zu langsam sein, um unvorhersehbare Situationen, welche ein sofortiges schnelles Handeln erfordern, um Unfälle mit Tieren oder Schäden am Gerät oder an anderen Objekten in der Umgebung zu vermeiden. Zudem ist zu erwarten, dass in Zukunft die Fahrgeschwindigkeiten auf dem Feld beziehungsweise Acker zunehmen werden, autonome Maschinenfunktionen in der Landwirtschaft erweitert werden, und die Kosten für den Ersatz oder die Reparatur von neuen High-Tech-Maschinen selbst nach leichten Unfällen oder Beschädigungen stark ansteigen.

Aus der Druckschrift 97+404.DE.0821 "Assistenzsystem zur Tiererkennung SEN-SOSAFE" der Pöttinger Landtechnik GmbH ist ein automatisiertes Assistenzsystem zur Tiererkennung für den Grünlandeinsatz eines Traktors mit einem Mähwerk bekannt. Wird ein Wildtier detektiert, gibt ein Bedienterminal sowohl eine optische als auch akustische Warnung für den Fahrer ab. Der Fahrer muss den Traktor dann manuell abbremsen, um eine Kollision mit dem Wildtier zu vermeiden.

Aus der EP 2 319 291 B1 ist ein Verfahren zur Steuerung einer Kombination eines Traktors und einer am Traktor angekoppelten Ballenpresse bekannt, bei dem eine Ballenpressensteuereinheit als Reaktion auf eine Anforderung der Ballenpresse ein Traktorhaltesignal erzeugt, und eine Traktorsteuereinheit als Reaktion auf das Traktorhaltesignal eine Traktorbewegung zwischenzeitlich verhindert, damit der vollständig aufgewickelte Ballen zum richtigen Zeitpunkt ausgeworfen werden kann. Die Traktorsteuereinheit umfasst mehrere Steuergeräte, die verschiedene Traktorsysteme und Traktorkomponenten steuern, wie beispielsweise Bremsen, Kupplung, Motor und Getriebe. Der Fahrer hat die Möglichkeit ein Traktorfreigabesignal zu erzeugen, um ein Haltesignal zu übergehen, worauf die Traktorsteuereinheit die Traktorbewegung freigibt. Mit welchen der Traktorsysteme oder Traktorkomponenten die Traktorsteuereinheit auf Anforderung der Ballenpresse die landwirtschaftliche Kombination anhält ist darin nicht beschrieben.

Aus der US 2018/0265064 A1 ist ein Verfahren zur Bremssteuerung eines Traktors mit einer Abtriebswelle und einer auf die Abtriebswelle wirksamen, federbetätigten und hydraulisch gelösten Parkbremse SAHR (Spring applied hydraulic released) mit einem Paar von Reibungsbremskomponenten bekannt. Bei einer Abbremsanforderung wird die SAHR-Bremse angesteuert, wobei die Bremskraft in Abhängigkeit der Drehgeschwindigkeit der Abtriebswelle begrenzt wird.

Vor diesem Hintergrund liegt der Erfindung die Aufgabe zugrunde, ein Verfahren zur Bremssteuerung einer Fahrzeugkombination mit einem Zugfahrzeug und einem an das Zugfahrzeug angekoppelten Anbaugerät oder Anhängefahrzeug vorzustellen, mit dem ein besseres Bremsverhalten bei dem Vorhandensein einer Bremsanforderung erreicht wird. Insbesondere soll beim Erkennen von Gefahrensituationen eine schnellere Abbremsung der Fahrzeugkombination erfolgen. Außerdem soll ein elektronisches Bremssteuersystem beschrieben werden, mit dem ein solches Verfahren betreibbar ist. Schließlich soll eine Fahrzeugkombination vorgestellt werden, welche mit einem solchen elektronischen Bremssteuersystem ausgestattet ist.

Die Lösung dieser Aufgabe ergibt sich aus den Merkmalen der unabhängigen Ansprüche, während vorteilhafte Ausgestaltungen und Weiterbildungen der Erfindung den zugeordneten abhängigen Ansprüchen definiert sind.

Die Erfindung betrifft daher zunächst ein Verfahren zur Bremssteuerung einer Fahrzeugkombination, welche ein Zugfahrzeug sowie ein an das Zugfahrzeug angekoppeltes Anbaugerät oder wenigstens ein Anhängefahrzeug umfasst, wobei die Fahrzeugkombination ein elektronisches Bremssteuersystem sowie erste Sensormittel zur Ermittlung der Fahrgeschwindigkeit aufweist, wobei zumindest das Zugfahrzeug eine durch das Bremssteuersystem ansteuerbare Reibungsbremsanlage aufweist, und wobei zumindest das angekoppelte Anbaugerät oder Anhängefahrzeug zweite Sensormittel zur Erkennung eines Abbremsbedarfs der Fahrzeugkombination und zur Signalisierung einer Abbremsanforderung aufweist.

Zur Lösung der gestellten Aufgabe ist bei diesem Verfahren vorgesehen, dass eine signalisierte Abbremsanforderung direkt oder indirekt an das Bremssteuersystem übermittelt wird, und dass die Fahrzeugkombination durch das Bremssteuersystem auf eine an das Bremssteuersystem übermittelte Abbremsanforderung hin mittels einer Ansteuerung mindestens der Reibungsbremsanlage des Zugfahrzeugs automatisch abgebremst wird.

Unter einer Abbremsung einer Fahrzeugkombination wird eine Fahrzeugverzögerung mit einer negativen Beschleunigung zur Verringerung der Fahrgeschwindigkeit oder zum vollständigen Abbau der Fahrgeschwindigkeit bis zum Fahrzeugstillstand verstanden. Unter einer Abbremsanforderung wird ein entsprechender Befehl zur Abbremsung der Fahrzeugkombination verstanden.

Die Erfindung betrifft demnach ein Verfahren zum Betreiben einer Off-Highway-Fahrzeugkombination hinsichtlich einer automatischen Ansteuerung der Reibungsbremsen des Zugfahrzeugs auf Anforderung eines angebauten Gerätes oder eines gezogenen Anhängefahrzeugs. Durch den Einsatz der Reibungsbremsen werden ein spontaneres Ansprechverhalten bei Vorliegen einer Abbremsanforderung sowie eine stärkere Verzögerung erreicht im Vergleich zu Ansteuerungen, welche die Antriebsstrangkomponenten des Fahrzeugs zum Abbremsen nutzen. Eine automatische Abbremsung wird insbesondere in der Regel schneller eingeleitet als das bei einer manuellen Bremsbetätigung durch den Fahrer aufgrund von dessen Reaktionszeit möglich wäre. Dadurch wird der Abbremsvorgang insgesamt zeitlich verkürzt. Dies ist vor allem in Gefahrensituationen von Vorteil, da so Unfälle zuverlässig vermieden werden können.

Zur Durchführung des Verfahrens ist eine elektronisch ansteuerbare Reibungsbremsanlage erforderlich, nicht jedoch der Fahrzeugantriebsmotor oder ein Fahrzeuggetriebe. Grundsätzlich kann die Fahrzeugkombination daher einen Antriebsstrang beliebiger Bauart aufweisen. Das Verfahren kann vorteilhaft sowohl in Antriebssträngen von Fahrzeugkombinationen mit verbrennungsmotorischen als auch mit elektromotorischen oder hybridischen Antrieben eingesetzt werden. Eine Unterstützung der Reibungsbremsen durch den Antriebsstrang ist möglich aber nicht zwingend notwendig. Insbesondere kann ein stufenloses Getriebe, wie es zunehmend häufig in modernen Traktoren verbaut ist, zur Unterstützung eines Bremsvorgangs als eine Zusatzbremse angesteuert werden und wirksam sein.

Die Fahrzeugkombination darf also anstelle eines stufenlosen Getriebes auch ein Stufengetriebe aufweisen. Dadurch ist das Verfahren sehr vielseitig einsetzbar. Demnach können mit dem beschriebenen Verfahren auch Fahrzeuge, welche mit einem Stufenautomatikgetriebe oder einem automatisierten Schaltgetriebe mit/ohne unter Last schaltbaren Gangwechsel auf die gleiche Weise mittels der Reibbremsen automatisch abgebremst werden. Gegebenenfalls wird eine Anfahrkupplung im Antriebsstrang mittels eines Steuergeräts elektronisch ausgekuppelt oder eine Drehmomentübertragung im Antriebstrang auf andere Weise unterbrochen oder geregelt, um so den Abbremsvorgang mit den Reibungsbremsen, gegebenenfalls bis zum Stillstand, durchzuführen.

Nach dem Ende des Abbremsvorgangs kann der Fahrer wieder die volle Kontrolle über das Fahrzeug übernehmen und einen Anfahrvorgang zum Wiederanfahren beziehungsweise Weiterfahren einleiten. Die Bremssteuerung kann derart ausgebildet sein, dass der Fahrer im Bedarfsfall manuell jederzeit in einen automatischen Abbremsvorgang eingreifen kann.

Das Verfahren kann als eine zusätzliche Bremssteuerfunktion in das bereits eingangs erläuterte Traktor-Geräte-Management TIM mit der ISOBUS-Norm ISO 11783 und dem Netzwerkprotokoll SAE J1939 implementiert werden. Dies ist wegen der Vereinheitlichung der Kommunikation verschiedener produkt- und/oder herstellerübergreifender Kombinationen von Zugfahrzeugen und Anbaugeräte oder Anhängefahrzeugen sinnvoll und vorteilhaft. Dies ist aber nicht zwingend notwendig für die Kommunikation zwischen dem Bremssteuersystem und dem Anbaugerät oder Anhängefahrzeug. Die Bremsanforderung kann von einem Steuergerät des Anbaugeräts oder Anhängefahrzeugs direkt an das Steuergerät des Bremssteuersystems übermittelt werden. Alternativ dazu ist eine indirekte Kommunikation über ein anderes Steuergerät möglich, wie beispielsweise über ein vorhandenes Traktorsteuergerät oder ein sogenanntes Gateway, also eine Netzwerkverbindungseinheit.

Die Beschreibung der Erfindung konzentriert sich zwar auf landwirtschaftliche Traktorkombinationen, die Erfindung ist jedoch nicht darauf beschränkt und kann bei jedem anderen Off-Highway-Fahrzeugtyp angewendet werden, welcher für den Einsatz geeigneter Anbaugeräte oder Anhängefahrzeuge ausgerüstet ist.

Gemäß einer Weiterbildung des Verfahrens ist vorgesehen,
dass bei einer signalisierten und an das Bremssteuersystem übermittelten Abbremsanforderung ein Zyklus mit mindestens folgenden Verfahrensschritten wenigstens einmal durchlaufen wird:
- Ermitteln der aktuellen Fahrgeschwindigkeit der Fahrzeugkombination,
- Ermitteln der Abweichung zwischen der angeforderten Abbremsung und einer aktuellen Abbremsung der Fahrzeugkombination,
- Unterbrechen oder Regeln einer Drehmomentübertragung im Antriebsstrang der Fahrzeugkombination,
- Erzeugen und Einstellen eines auf die Reibungsbremsen mindestens einer Fahrzeugachse des Zugfahrzeugs wirkenden Bremsdrucks in Abhängigkeit von der ermittelten Abweichung zwischen der angeforderten und der aktuellen Abbremsung der Fahrzeugkombination, sowie
- Abbremsen der Fahrzeugkombination bis zum Fahrzeugstillstand oder zumindest bis erkannt wird, dass die der Abbremsanforderung zugrunde liegende Situation nicht mehr besteht.

Wenn die Sensorik des Anbaugeräts oder Anhängefahrzeugs eine betriebsrelevante oder eine sicherheitsrelevante Situation erkennt, wird eine Abbremsung der Fahrzeugkombination angefordert. Der Abbremsbefehl wird demnach von einem Steuergerät des Anbaugeräts oder Anhängefahrzeugs selbst oder über ein anderes Steuergerät, beispielsweise ein Traktorsteuergerät, an ein Bremssteuergerät des elektronischen Bremssteuersystems der Fahrzeugkombination übermittelt. Die Größe der erforderlichen Fahrzeugverzögerung, also der angeforderten negativen Beschleunigung, um die Fahrzeugkombination in möglichst kurzer Zeit sicher anhalten zu können, kann von dem Steuergerät des Anbaugeräts oder Anhängefahrzeugs durch eine Abschätzung ermittelt werden. Diese Abschätzung ist insbesondere im Falle eines Not-Halts wichtig. Eine Notbremsung kann beispielsweise angefordert werden, wenn ein Tier in der Erntefläche vor dem Zugfahrzeug entdeckt wird. Eine betriebsrelevante Abbremsung kann beispielsweise angefordert werden, wenn eine Geräteaufgabe eine Änderung der Fahrgeschwindigkeit oder eine Verzögerung bis zum Stillstand erfordert. Dies kann beispielsweise das Auswerfen eines Ballens aus einer angekoppelten Ballenpressmaschine sein.

Wenn das Bremssteuersystem eine Abbremsanforderung empfängt, wird zunächst die aktuelle Fahrgeschwindigkeit sowie eine aktuelle Fahrzeugverzögerung oder Fahrzeugbeschleunigung der Fahrzeugkombination ermittelt. Es kann vorgesehen sein, dass die Fahrgeschwindigkeit sowie die Fahrgeschwindigkeitsänderung der Fahrzeugkombination mithilfe von mindestens zwei an einer Fahrzeugachse der Fahrzeugkombination angeordneten ersten Sensormitteln in Form von Raddrehzahlsensoren, eines Fahrgeschwindigkeitssensors an einer Welle eines Fahrzeuggetriebes, eines Fahrbeschleunigungssensors, eines Bodenradarsensors und/oder eines Satellitennavigationssystems ermittelt wird.

Demnach kann im einfachsten Fall die Ermittlung der Fahrgeschwindigkeit sowie der Abbremsung oder gegebenenfalls der Beschleunigung der Fahrzeugkombination mithilfe von mindestens zwei Raddrehzahlsensoren an einer Fahrzeugachse erfolgen. Moderne Traktoren sind zunehmend mit Raddrehzahlsensoren ausgestattet. Die Fahrgeschwindigkeit und die Fahrgeschwindigkeitsänderung werden mittels eines geeigneten Software-Algorithmus aus den ermittelten Raddrehzahldaten und den daraus abgeleiteten Radgeschwindigkeitsdaten abgeleitet. Die Verwendung von mehr als zwei Raddrehzahlsensoren erhöht die Zuverlässigkeit des Verzögerungssignals und ermöglicht die Durchführung zusätzlicher Sicherheitskontrollen. Vorzugsweise werden alle Fahrzeugräder, an denen Raddrehzahlsensoren vorhanden sind, zur Ermittlung der Fahrgeschwindigkeit und Fahrgeschwindigkeitsänderung genutzt. Sind keine Raddrehzahlsensoren an einzelnen Fahrzeugrädern vorhanden, können die Geschwindigkeits- und Beschleunigungsdaten aus einer anderen verfügbaren Quelle erhalten werden.

Beispielsweise kann die Drehzahl einer oder mehrerer Getriebewellen gemessen werden. Daraus lässt sich eine Information über die Fahrzeuggeschwindigkeit ermitteln.

Das Bremssteuerungssystem aktiviert die Reibungsbremsen über eine Stelleinheit, die nach der jeweiligen Ausführung der Bremsanlage der Fahrzeugkombination beispielsweise eine elektrohydraulische oder elektropneumatische Ventileinheit oder ein elektrischer Aktuator sein kann. Im Falle einer elektrohydraulischen Bremsanlage aktiviert das Bremssteuersystem die Reibungsbremsen, indem es über ein elektrohydraulisches Proportionalventil, welches mit den Reibungsbremsen mindestens einer Achse, beispielsweise der Hinterachse des Traktors, verbunden ist, hydraulischen Bremsdruck aufbaut. Die Höhe des Bremsdrucks wird in Abhängigkeit von der gewünschten Verzögerung und der gemessenen Verzögerung geschätzt sowie unter der Berücksichtigung, dass der Bremsvorgang sicher durchführbar ist. Eine in dem Bremssteuersystem enthaltene Steuerlogik minimiert dabei die Differenz zwischen dem gewünschten und dem gemessenen Verzögerungswert mittels eines geeigneten Software-Algorithmus, sodass das Fahrzeug dem gewünschten Verzögerungswert folgt. Vorzugsweise ist das elektrohydraulische Proportionalventil parallel zu einem Fußbremsventil installiert, wodurch der Fahrer den Ausgang des Proportionalventils durch eine Betätigung des Bremspedals übersteuern kann, um den automischen Bremsvorgang notfalls zu beeinflussen, insbesondere weiter verstärken zu können.

Wie bereits erwähnt, ist für die Durchführung des Verfahrens lediglich eine elektronisch ansteuerbare Reibungsbremsanlage, jedoch keine bremsend wirkende antriebsstrangbezogene Einrichtung erforderlich. Ungeachtet dessen ist eine Unterstützung der Reibungsbremsen durch den Antriebsstrang möglich. Insbesondere kann ein stufenloses Getriebe unterstützend zur Fahrzeugverzögerung genutzt werden. Im Falle einer solchen gewünschten Getriebeunterstützung kann die Ansteuerung der Reibungsbremsen mit einer Ansteuerung des Getriebes zur Anpassung von dem Übersetzungsverhältnis kombiniert werden. Dies kann beispielsweise in einem regulären Arbeitseinsatz mit häufigen Haltevorgängen sinnvoll sein, um den Bremsenverschleiß zu minimieren. Im einfachsten Fall, also ohne Bremsunterstützung durch einen Antriebsmotor und/oder ein Getriebe, wird der Antriebsstrang während des Abbremsens elektronisch im Kraftfluss gesteuert unterbrochen.

Die Bremssteuerung endet, wenn die angeforderte Abbremsung erreicht ist. Beispielsweise kann im Arbeitseinsatz mit einem Anbaugerät eine deutliche Verringerung der Geschwindigkeit ausreichend sein. Im Fall einer erkannten Gefahrensituation wird die Fahrzeugkombination zwar meistens bis zum Fahrzeugstillstand abgebremst. Die Fahrzeugkombination muss jedoch nicht immer zum Stehen gebracht werden, wenn die zugrunde liegende Situation noch während der Abbremsung nicht mehr gegeben ist, beispielsweise wenn ein Tier die Flucht ergriffen hat. Der Arbeitsprozess, beispielsweise das Mähen einer Wiese, muss dann nicht unbedingt unterbrochen werden. In vielen Fällen kann schon eine kurzzeitige Geschwindigkeitsverringerung ausreichen, um den Betrieb sicher fortsetzen zu können. Außerdem kann dadurch der Verschleiß der Bremsen und der Komponenten im Antriebsstrang sowie der Energieverbrauch des Antriebsmotors verringert werden.

Gemäß einer weiteren Ausführungsform der Erfindung kann vorgesehen sein, dass bei einer Abbremsung der Fahrzeugkombination bis zum Fahrzeugstillstand anschließend automatisch eine Feststellbremse zumindest des Zugfahrzeugs betätigt wird. Durch diese Erweiterung der Bremssteuerung mittels einer vorhandenen Feststellbremse wird die Fahrzeugkombination nach einer erfolgreichen Verzögerung bis zum Stillstand selbständig in der aktuellen Position gehalten. Dies erhöht insbesondere auf einem abschüssigen Untergrund die Betriebssicherheit und den Fahrkomfort. Zudem ermöglicht diese Funktion es dem Fahrer ohne weitere Bremsaktivität das Zugfahrzeug zu verlassen, um gegebenenfalls einen störenden Gegenstand vor dem Zugfahrzeug zu entfernen.

Gemäß einer anderen Ausführungsform der Erfindung kann vorgesehen sein, dass zu Beginn einer automatischen Abbremsung der Fahrzeugkombination ein akustisches und/oder optisches Warnsignal ausgegeben wird, und/oder dass nach der Beendigung eines solchen Abbremsvorgangs ein akustisches und/oder optisches Freigabesignal ausgegeben wird. Der Fahrer kann beispielsweise auf einer Anzeige eines elektronischen Endgeräts unmittelbar darüber informiert werden, wenn ein automatischer Bremsvorgang folgt. Dadurch erlangt er Kenntnis darüber, dass ein gegebenenfalls abruptes Abbremsen nicht auf einer Fehlfunktion oder einem Defekt des Fahrzeugs beruht, welches sein Eingreifen erfordern würde, sondern auf einer regulär eingeleiteten Bremsfunktion. Nach Beendigung des automatischen Bremsvorgangs kann der Fahrer informiert beziehungsweise erneut informiert werden. Dadurch weiß der Fahrer, wann er die Kontrolle wieder übernehmen und weiterfahren kann. Der Fahrkomfort und die Betriebssicherheit werden dadurch erhöht.

Weiter kann vorgesehen sein, dass bei einer Fahrzeugkombination mit einem Anbaugerät oder einem Anhängefahrzeug, welches eine eigene durch das Bremssteuersystem ansteuerbare Anhänger-Reibungsbremsanlage aufweist, bei einer signalisierten und an das Bremssteuersystem übermittelten Abbremsanforderung zusätzlich die Anhängerreibungsbremsen aktiviert werden. Demnach werden zusätzlich zu den Reibungsbremsen des Zugfahrzeugs vorhandene Anhängereibungsbremsen eines gezogenen Anbaugeräts oder Anhängefahrzeugs mittels des Bremssteuersystems aktiviert, beispielsweise über ein Anhängersteuerventil. Durch eine parallele Aktivierung der Zugfahrzeugbremsen und der zum Beispiel Anhängerbremsen erhöhen sich die Bremsleistung und die Bremssicherheit.

Zudem kann vorgesehen sein, dass bei einer Fahrzeugkombination mit einem Zugfahrzeug, welches eigene Sensormittel zur Erkennung eines Abbremsbedarfs der Fahrzeugkombination und zur Signalisierung einer Abbremsanforderung aufweist, eine Abbremsanforderung durch die Sensormittel des Zugfahrzeugs und/oder oder durch die Sensormittel des Anbaugeräts oder Anhängefahrzeugs direkt oder indirekt an das Bremssteuersystem übermittelt wird.

Das Verfahren gemäß der Erfindung geht davon aus, dass bei der Bremssteuerung der Fahrzeugkombination zumindest das an das Zugfahrzeug angekoppelte Anbaugerät oder das Anhängefahrzeug zweite Sensormittel zur Erkennung eines Abbremsbedarfs der Fahrzeugkombination sowie zur Signalisierung einer Abbremsanforderung aufweist. Das Verfahren ist darüber hinaus aber auch an dem Zugfahrzeug selbst vorteilhaft durchführbar, wenn dieses Sensoren aufweist, welche ein für eine Bremsanforderung relevantes Ereignis oder einen solchen Zustand feststellen können. In diesem Fall können das Anbaugerät oder das Anhängefahrzeug sowie auch das Zugfahrzeug einen Bremsvorgang auslösen.

Es kann außerdem vorgesehen sein, dass eine Bremsanforderung des Anbaugeräts oder Anhängefahrzeugs durch eine Bremsanforderung des Zugfahrzeugs außer Kraft gesetzt wird, oder umgekehrt, dass eine Bremsanforderung des Zugfahrzeugs durch eine Bremsanforderung des Anbaugeräts oder Anhängefahrzeugs außer Kraft gesetzt wird.

Gemäß einer detaillierten Ausgestaltung eines die Lehre der Erfindung nutzenden Verfahrens kann dieses die folgenden Verfahrensschritte aufweisen:
- Schritt S1: In einer Fahrzeugkombination sind betriebsbereit ein Motorsteuergerät, ein Getriebesteuergerät, ein Traktorsteuergerät und ein Bremssteuergerät des Zugfahrzeugs sowie ein Anbaugerät-Steuergerät, und das Bremssteuergerät wartet auf einen Befehl vom Anbaugerät-Steuergerät.
- Schritt S2: Empfangen von Sensordaten eines Umgebungsdetektors im Anbaugerät-Steuergerät.
- Schritt S3: Erkennen einer Nothalt-Situation durch das Anbaugerät-Steuergerät.
- Schritt S4a: Erzeugen eines Abbremsbefehls im Anbaugerät-Steuergerät und Übermitteln des Abbremsbefehls an das Bremssteuergerät über eine Steuerleitung gemäß einem ersten Befehlsweg, oder
- Schritt S4b: Erzeugen eines Abbremsbefehls im Anbaugerät-Steuergerät und Übermitteln des Abbremsbefehls über einen zweiten Befehlsweg mittels ISOBUS an das Traktorsteuergerät und von dort mittels CAN-Datenbus an das Bremssteuergerät.
- Schritt S5: Empfangen des Abbremsbefehls im Bremssteuergerät.
- Schritt S6: Feststellen der Zulässigkeit des empfangenen Abbremsbefehls.
- Schritt S7: Bereitstellen eines zuvor ermittelten, von einer Konfiguration der Fahrzeugkombination und/oder von einer Fahrsituation abhängigen maximal zulässigen Wertes der Soll-Verzögerung zur Berücksichtigung im weiteren Verfahrensablauf, wenn der Wert der Soll-Verzögerung innerhalb eines maximal zulässigen Wertebereiches liegt.
- Schritt S8: Anweisen des Getriebesteuergeräts, eine Fahrkupplung im Antriebsstrang des Zugfahrzeugs auszukuppeln,
   oder Anweisen des Getriebesteuergeräts, einen Reibungsbremsvorgang durch Steuern und Variieren einer Getriebeübersetzung zu unterstützen.
- Schritt S9: Ansteuern eines ersten elektronischen Bremsventils und bei Bedarf eines zweiten elektronischen Bremsventils und bei Bedarf eines Anhängersteuerventils zur Erzeugung eines Bremsdrucks zur Betätigung wenigstens einer Reibungsbremsanlage des Zugfahrzeugs sowie gegebenenfalls einer Reibungsbremsanlage des Anbaugeräts oder Anhängefahrzeugs mittels des Bremssteuergeräts derart,
   dass die Fahrzeugkombination mit einem Verzögerungswert abgebremst wird, welcher maximal so groß ist wie die Differenz aus dem Wert der Soll-Verzögerung und dem Wert der Ist-Geschwindigkeitsänderung, wobei der maximal zulässige Wert der Soll-Verzögerung berücksichtigt wird.
- Schritt S10: Senden eines Bremsdruckmesswertes eines ersten Drucksensorsund gegebenenfalls eines Bremsdruckmesswertes eines zweiten Drucksensors an das Bremssteuergerät.
- Schritt S11: Überwachen des Bremsdrucks.
- Schritt S12: Senden von Drehzahlsignalen von wenigstens zwei Raddrehzahlsensoren an das Bremssteuergerät.
- Schritt S13: Berechnen der aktuellen Ist-Geschwindigkeit und der aktuellen Ist-Geschwindigkeitsänderung der Fahrzeugkombination aus den empfangenen Drehzahlsignalen im Bremssteuergerät.
- Schritt S14: Berechnen der Differenz zwischen dem Wert der Soll-Verzögerung und dem Wert der Ist-Geschwindigkeitsänderung im Bremssteuergerät.
- Schritt S15: Anpassen des Bremsdrucks zur Minimierung der Differenz zwischen dem Wert der Soll-Verzögerung und dem Wert der Ist-Geschwindigkeitsänderung im Bremssteuergerät und dabei Überwachen des Bremsdrucks.
- Schritt S16: Weiterleiten des Abbremsbefehls an Schritt S18, wenn die Fahrgeschwindigkeit gleich Null ist, andernfalls weiter mit Schritt S17.
- Schritt S17: Überprüfen, ob ein zeitlich neuer oder ein anderer Abbremsbefehl verfügbar ist, und wenn dies der Fall ist, dann zurück zu Schritt S6, andernfalls weiter mit Schritt S12.
- Schritt 18: Aktivieren einer Feststellbremse.
- Schritt 19: Beenden des Verfahrens.

In weiterer Ausgestaltung dieses detaillierten Verfahrensablaufs kann vorgesehen sein, dass bei der Ansteuerung eines ersten elektronischen Bremsventils und bei Bedarf eines zweiten elektronischen Bremsventils und bei Bedarf eines Anhängersteuerventils zur Erzeugung eines Bremsdrucks berücksichtigt wird, ob die Fahrzeugkombination eine Fahrstrecke bergauf oder bergab fährt, wobei der Bremsdruck bei einer Fahrt bergauf kleiner ist als bei einer Fahrt bergab. Hierzu wird der Messwert wenigstens eines weiteren Sensors genutzt, mit dem feststellbar ist, ob die Fahrzeugkombination beziehungsweise das Zugfahrzeug oder der Traktor bergauf oder bergab fährt. Ein solcher Sensor kann beispielsweise die Daten eines Navigationssystems nutzen. Der Bremsdruck kann deshalb bei einer Fahrt bergauf kleiner sein als bei einer Fahrt bergab, weil die auf das Fahrzeug wirkende Hangabtriebskraft eine durchzuführende Fahrzeugverzögerung unterstützt.

Da landwirtschaftlich, forstwirtschaftlich oder bauwirtschaftlich genutzte Fahrzeuge auch während einer Vorwärtsfahrt beladen oder entladen werden können, sieht eine andere Weiterbildung des Verfahrens zur Erhöhung der Fahrsicherheit vor, dass bei der Ansteuerung eines ersten elektronischen Bremsventils und bei Bedarf eines zweiten elektronischen Bremsventils und bei Bedarf eines Anhängersteuerventils zur Erzeugung eines Bremsdrucks die jeweils aktuelle Gesamtmasse der Fahrzeugkombination berücksichtigt wird. Hierdurch wird die Erkenntnis genutzt, dass ausgehend von einer bestimmten Fahrgeschwindigkeit ein unbeladenes Fahrzeug bei gleicher Bremsverzögerung einen geringeren Bremsdruck benötigt als ein mit einem Beladungsgut beladenes Fahrzeug.

Außerdem kann vorgesehen sein, dass bei der Ermittlung eines maximal zulässigen Werts der Soll-Verzögerung berücksichtigt wird, ob die Fahrzeugkombination quer zu einer Hangneigung fährt. Auch hierzu wird der Messwert wenigstens eines weiteren Sensors genutzt, mit dem die Neigung des Zugfahrzeugs beziehungsweise Traktors quer zu dessen Fahrtrichtung feststellbar ist. Es können ebenfalls die Daten eines Navigationssystems genutzt werden. Bei einer Fahrt der Fahrzeugkombination quer zu einem Hang wird ein vergleichsweise kleiner maximal zulässiger Wert der Soll-Verzögerung vorgegeben, da in solchen Betriebssituationen abrupte Fahrzeugbewegungen aus Fahrsicherheitsgründen vermieden werden sollten.

Weiter kann bei der Bestimmung des Bremsdrucks sowie bei der Bestimmung eines maximal zulässigen Werts der Soll-Verzögerung beachtet werden, ob an dem Zugfahrzeug beziehungsweise Traktor ein Anbaugerät oder ein Anhängefahrzeug angekoppelt ist, und um welches Anbaugerät oder Anhängefahrzeug es sich dabei handelt. Hierdurch kann die Arbeitsweise des Anbaugeräts beziehungsweise des Anhängefahrzeugs auf das Verzögerungsverhalten sowie die Fahrsicherheit der Fahrzeugkombination berücksichtigt werden.

Zur Lösung der vorrichtungsbezogenen Aufgabe ist ein elektronisches Bremssteuersystem einer Fahrzeugkombination vorgesehen, welche ein Zugfahrzeug und ein an das Zugfahrzeug angekoppeltes Anbaugerät und/oder wenigstens ein Anhängefahrzeug umfasst. Das Bremssteuersystem weist Sensor- und Steuermittel zur Ermittlung der Fahrgeschwindigkeit sowie zur Ermittlung einer Anforderung zum Abbremsen der Fahrzeugkombination und zur automatischen Ansteuerung einer Reibungsbremsanlage des Zugfahrzeugs und/oder des angekoppelten Anbaugeräts oder Anhängefahrzeugs auf.

Schließlich wird eine Fahrzeugkombination beansprucht, aufweisend einen landwirtschaftlichen Traktor mit einem Anbaugerät und/oder wenigstens einem Anhängefahrzeug, oder aufweisend ein anderes Nutzfahrzeug für die Verwendung abseits von Straßen, mit einem elektronischen Bremssteuersystem, welches wie gerade beschrieben aufgebaut ist und welches zur Durchführung des Verfahrens mit den Merkmalen der Erfindung betreibbar ist.

Die Erfindung wird nachstehend anhand eines in der beigefügten Zeichnung dargestellten Ausführungsbeispiels weiter erläutert. In der Zeichnung zeigt
Fig. 1 eine schematische Seitenansicht einer landwirtschaftlichen Fahrzeugkombination bestehend aus einem Traktor und einem Anhängefahrzeug mit verschiedenen elektronischen Steuergeräten, und
Fig. 2 einen Schaltplan eines Bremssteuersystems für einen Traktor mit einer ansteuerbaren Reibungsbremsanlage gemäß Fig. 1.

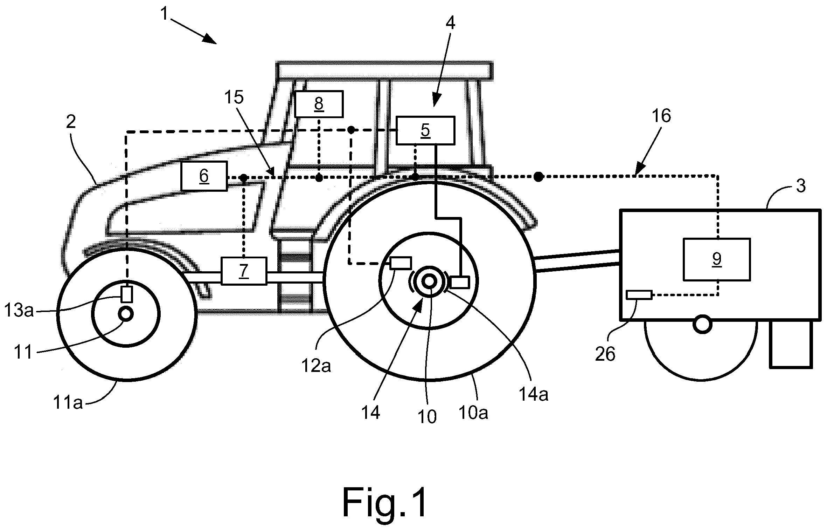

Demnach besteht die in der Fig. 1 in dargestellte Fahrzeugkombination 1 aus einem als Traktor 2 ausgebildetem Zugfahrzeug und einem von dem Traktor 2 gezogenen Anbaugerät 3, welches beispielsweise zur Bodenbearbeitung auf einer Agrarfläche eingesetzt wird. Sofern dieses Anbaugerät 3 wenigstens ein Fahrzeugrad aufweisen würde, würde dieses als ein Anhängefahrzeug bezeichnet werden. Die Fahrzeugkombination 1 weist verschiedene elektronische Steuergeräte auf, wobei ein Bremssteuergerät 5 in dem Traktor 2 angeordnet und einem Bremssteuersystem 4 der Fahrzeugkombination 1 zugeordnet ist. Außerdem sind in dem Traktor 2 angeordnet ein Motorsteuergerät 6 zur Steuerung eines Antriebsmotors des Traktors 2, beispielsweise eines Dieselmotors, ein Getriebesteuergerät 7 zur Steuerung eines Fahrzeuggetriebes, beispielsweise eines stufenlosen Getriebes, sowie ein Traktorsteuergerät 8. Das Traktorsteuergerät 8 empfängt im regulären Betrieb verschiedene Fahrzeuginformationen, wie beispielsweise die Fahrgeschwindigkeit, die Drehzahl einer das Anbaugerät 3 antreibenden Zapfwelle sowie die Position einer Dreipunktaufhängung und stellt diese Informationen zur Verfügung.

Außerdem weist das Anbaugerät 3 ein elektronisches Anbaugerät-Steuergerät 9 auf. Wenn das Anbaugerät 3 wenigstens ein Fahrzeugrad aufweisen würde, würde das Anbaugerät-Steuergerät 9 als ein Anhängefahrzeug-Steuergerät bezeichnet werden.

Das Anbaugerät-Steuergerät 9 ist zur Steuerung von aufgabenspezifischen Arbeitsvorgängen vorgesehen. Darüber hinaus ist das Anbaugerät-Steuergerät 9 zum Empfang von Sensorsignalen von Sensormitteln 26 zur Erkennung eines gefahrenbedingten Abbremsbedarfs der Fahrzeugkombination 1 sowie zur Erzeugung und Sendung von Abbremsanforderungen aufgrund solcher Sensorsignale ausgebildet. Dies wird im Folgenden noch näher erläutert.

Die genannten fünf Steuergeräte 5, 6, 7, 8, 9 sind über eine Leitung eines CAN-Datenbus 15 miteinander vernetzt, wobei das Anbaugerät-Steuergerät 9 und das Traktorsteuergerät 8 vorzugsweise über einen ISOBUS 16 miteinander verbunden sind. Die elektrischen Steckerverbindungen und Leitungen zwischen dem Anbaugerät-Steuergerät 9 und dem Traktorsteuergerät 8 sind demnach konform zur Norm ISO 11783 ausgebildet und die Kommunikation der Teilnehmer erfolgt gemäß dem Netzwerkprotokoll SAE J1939.

Der Traktor 2 weist im vorliegenden Beispiel sowohl an den zwei Hinterachsrädern 10a, 10b seiner Hinterachse 10 als auch an den zwei Vorderachsrädern 11a, 11b seiner Vorderachse 11 erste Sensormittel zur Erfassung der Fahrgeschwindigkeit in Form von jeweils einen Raddrehzahlsensor 12a, 12b, 13a, 13b auf. Die insgesamt vier Raddrehzahlsensoren 12a, 12b, 13a, 13b sind mit dem Bremssteuergerät 5 über nicht weiter bezeichnete Sensorleitungen verbunden.

Das Anbaugerät 3 weist zweite Sensormittel in Form eines Umgebungsdetektors 26 zur Erkennung eines Abbremsbedarfs der Fahrzeugkombination 1 im regulären Betrieb und in unerwarteten Situationen auf. Insbesondere sind diese Sensormittel dazu ausgebildet, um Notsituationen zu erkennen, welche ein sofortiges Anhalten der Fahrzeugkombination 1 erfordern. Derartige Sensoren sind bereits bekannt und werden ständig weiterentwickelt. Die Umgebungserkennung kann mit Hilfe von Scannern und/oder Kameras erfolgen, welche in verschiedenen Wellenlängenbereichen arbeiten und die Umgebung und/oder eine Betriebsposition detektieren. Beispielsweise sei dazu auf die bereits erwähnte Druckschrift der Pöttinger Landtechnik GmbH für die Tiererkennung verwiesen.

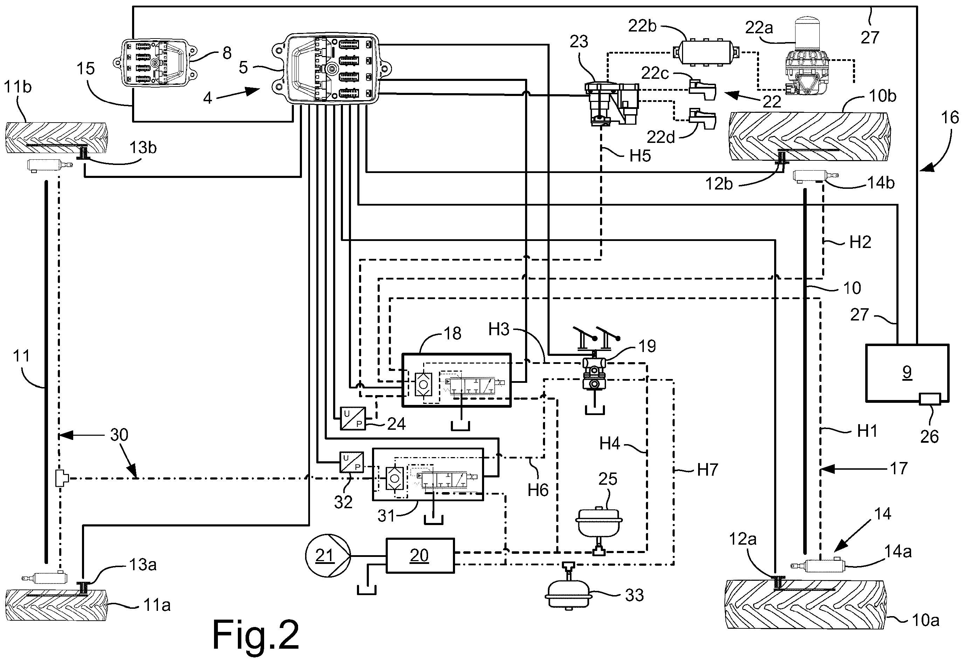

Der Traktor 2 ist mit einer Reibungsbremsanlage 14 ausgestattet, bei der vorliegend an jedem Hinterachsrad 10a, 10b jeweils eine Reibungsbremse 14a, 14b mit einem hydraulischen Bremszylinder angeordnet ist. Wie dargestellt, können als optionale Ausstattungen die beiden Vorderachsräder 11a, 11b ebenfalls mittels Reibungsbremsen abbremsbar sein. Gegebenenfalls kann das Anbaugerät 3 zudem eine Anhänger-Reibungsbremsanlage 22 aufweisen. Dies ist in Fig. 1 nicht explizit dargestellt, jedoch gemäß Fig. 2 als optionale Ausstattung vorgesehen. Wichtig ist hier lediglich, dass der Traktor 2 über eine Reibungsbremsanlage an einer Achse, in der Regel an der Hinterachse 10, verfügt. Die in Fig. 1 und in Fig. 2 gezeigte Reibungsbremsanlage 14 ist im vorliegenden Beispiel als eine elektrohydraulische Bremsanlage ausgebildet und von dem Bremssteuergerät 5 ansteuerbar ist. Dies wird nachfolgend näher beschrieben.

Fig. 2 zeigt demnach einen Schaltplan des Bremssteuersystems 4 zur Bremssteuerung der Reibungsbremsanlage 14 für das als Traktor ausgebildete Zugfahrzeug 2 mit einem ersten hydraulischen Bremskreis 17 gemäß Fig. 1 und mit einem lediglich optional vorgesehenen zweiten hydraulischen Bremskreis 30, welcher nur für den Fall vorgesehen ist, dass der Traktor 2 wie angedeutet auch an den Vorderachsrädern 11a, 11b mit Reibungsbremsen ausgestattet ist. Demnach ist in dem ersten Bremskreis 17 ein erstes elektronisches Bremsventil 18 angeordnet, welches über eine erste Hydraulikleitung H1 und eine zweite Hydraulikleitungen H2 mit jeweils einem zugeordneten Bremszylinder der ersten Reibungsbremse 14a und der zweiten Reibungsbremse 14b der Hinterachsräder 10a, 10b hydraulisch verbunden ist. Außerdem ist das erste Bremsventil 18 über eine dritte Hydraulikleitung H3 mit einem Fußbremsventil 19 verbunden, welches seinerseits über eine vierte Hydraulikleitung H4 und ein Speicherladeventil 20 samt Druckbegrenzer mit einer Hydraulikpumpe 21 hydraulisch verbunden ist. In der vierten Hydraulikleitung H4 ist zudem ein erster hydraulischer Druckspeicher 25 integriert. Zur Messung und Überwachung des Hydraulikdrucks weist der erste Bremskreis 17 einen ersten Drucksensor 24 auf, welcher mit dem Bremssteuergerät 5 des Bremssteuersystems 4 elektrisch verbunden ist.

Wie bereits erwähnt ist der zweite hydraulische Bremskreis 30 nur für den Fall vorgesehen, dass der Traktor 2 auch an den Vorderachsrädern 11a, 11b mit Reibungsbremsen ausgestattet ist (in Fig. 1 nicht dargestellt). Der in Fig. 2 gezeigte optionale zweite hydraulische Bremskreis 30 weist ein zweites elektronisches Bremsventil 31 auf, welches über eine sechste Hydraulikleitung H6 mit dem Fußbremsventil 19 und von dort mittels einer siebten Hydraulikleitung H7 über das Speicherladeventil 20 mit der Hydraulikpumpe 21 verbunden ist. In die siebte Hydraulikleitung H7 ist zudem ein zweiter hydraulischer Druckspeicher 33 integriert. Zu dem zweiten hydraulischen Bremskreis 30 gehört auch ein zweiter Drucksensor 32, welcher über eine weitere nicht bezeichnete Sensorleitung mit dem Bremssteuergerät 5 elektrisch verbunden ist. Der Aufbau des zweiten Bremskreises 30 entspricht daher im Wesentlichen dem des ersten Bremskreises 17. Im Unterschied zum ersten Bremskreis 17 ist eine gemeinsame hydraulische Leitung für die optionalen Vorderradbremsen vorgesehen.

Für den Fall, dass das Anbaugerät 3 eine eigene Anhänger-Reibungsbremsanlage 22 aufweist, ist gemäß dem in Fig. 2 gezeigten beispielhaften Schaltplan in dem ersten Bremskreis 17 eine weitere fünfte Hydraulikleitung H5 vorgesehen, welche das erste Bremsventil 18 mit einem Anhängersteuerventil 23 eingangsseitig hydraulisch verbindet. Das Anhängersteuerventil 23 weist in bekannter Bauart mehrere durch das Bremssteuergerät 5 elektrisch betätigbare Wegeventile auf. Demnach ist das Anhängersteuerventil 23 vorliegend in den hydraulischen Bremskreis des Traktors 2 integriert und mittels des Bremssteuergeräts 5 betätigbar, um die nur teilweise dargestellte Anhänger-Reibungsbremsanlage 22 anzusteuern. Die Anhänger-Reibungsbremsanlage 22 ist im vorliegenden Beispiel als eine pneumatische Bremsanlage ausgebildet. Die Schnittstelle zwischen dem Anhängersteuerventil 23 und der Anhänger-Reibungsbremsanlage 22 ist gemäß der EU-Richtlinie EU2015-68 ausgelegt und muss hier nicht näher erläutert werden. Mittels des Anhängersteuerventils 23 kann ein von einem Luftkompressor 22a erzeugter pneumatischer Vorratsdruck über einen Drucklufttank 22b an einen Vorratsdruck-Kupplungskopf 22c geleitet werden. An den Vorratsdruck-Kupplungskopf 22c kann eine nicht dargestellte pneumatische Vorratsdruckleitung der Anhänger-Reibungsbremsanlage 22 angekoppelt werden. Außerdem weist das Anhängersteuerventil 23 ausgangsseitig einen Steuerdruckausgang auf, welcher mit einem Steuerdruck-Kupplungskopf 22d verbunden ist. An diesen Steuerdruck-Kupplungskopf 22d kann ein pneumatischer Steuerdruck für die Reibungsbremsen der Anhänger-Reibungsbremsanlage 22 zur Verfügung gestellt werden kann. Demnach kann an den Steuerdruck-Kupplungskopf 22d eine nicht dargestellte pneumatische Steuerdruckleitung der Anhänger-Reibungsbremsanlage 22 angekoppelt werden, um die Bremszylinder der Reibungsbremsen des Anbaugeräts 3 im Bremsfall mit dem Steuerdruck zu beaufschlagen.

Der erste Bremskreis 17 und falls vorhanden der zweite Bremskreis 30 sind mit dem Bremssteuergerät 5 elektrisch verbunden und mittels diesem steuerbar. Außerdem ist das Bremssteuergerät 5 über den schon erwähnten CAN-Datenbus 15 mit dem Traktorsteuergerät 8 elektrisch verbunden. Das Traktorsteuergerät 8 ist außerdem über den ISOBUS 16 mit dem Anbaugerät-Steuergerät 9 des Anbaugeräts 3 verbunden. Als eine dazu alternative Datenverbindung zeigt Fig. 2 eine direkte elektrische Steuerleitung 27 zwischen dem Anbaugerät-Steuergerät 9 und dem Bremssteuergerät 5. Das Anbaugerät-Steuergerät 9 kann also einen Abbremsbefehl über das Traktorsteuergerät 8 an das Bremssteuergerät 5 übermitteln oder in der erwähnten alternativen Ausführungsform direkt an das Bremssteuergerät 5 senden. Weiter ist das Bremssteuergerät 5 mit den ersten Sensormitteln in Form von vier Raddrehzahlsensoren 12a, 12b, 13a, 13b über nicht weiter bezeichnete Sensorleitungen jeweils einzeln elektrisch verbunden.

Ein die Merkmale der Erfindung aufweisendes Verfahren kann an der Fahrzeugkombination 1 gemäß Fig. 1 durchgeführt werden und wird nachfolgend beschrieben. Das Bremssteuersystem 4 arbeitet dazu beispielhaft mit einem Algorithmus, welcher vollständig oder teilweise in dem Bremssteuergerät 5, in dem Traktorsteuergerät 8 sowie in dem Anbaugerät-Steuergerät 9 abgespeichert ist und dort betrieben wird. Gemäß diesem Algorithmus sind die folgenden Verfahrensschritte vorgesehen:
- Schritt S1: In einer Fahrzeugkombination 1 sind betriebsbereit ein Motorsteuergerät 6, ein Getriebesteuergerät 7, ein Traktorsteuergerät 8 und ein Bremssteuergerät 5 des Zugfahrzeugs 2 sowie ein Anbaugerät-Steuergerät 9, und das Bremssteuergerät 5 wartet auf einen Befehl vom Anbaugerät-Steuergerät 9.
- Schritt S2: Empfangen von Sensordaten eines Umgebungsdetektors 26 im Anbaugerät-Steuergerät 9.
- Schritt S3: Erkennen einer Nothalt-Situation durch das Anbaugerät-Steuergerät 9.
- Schritt S4a: Erzeugen eines Abbremsbefehls im Anbaugerät-Steuergerät 9 und Übermitteln des Abbremsbefehls an das Bremssteuergerät 5 über eine Steuerleitung 27 gemäß einem ersten Befehlsweg, oder
- Schritt S4b: Erzeugen eines Abbremsbefehls im Anbaugerät-Steuergerät 9 und Übermitteln des Abbremsbefehls über einen zweiten Befehlsweg mittels ISOBUS an das Traktorsteuergerät 8 und von dort mittels CAN-Datenbus 15 an das Bremssteuergerät 5.
- Schritt S5: Empfangen des Abbremsbefehls im Bremssteuergerät 5.
- Schritt S6: Feststellen der Zulässigkeit des empfangenen Abbremsbefehls.
- Schritt S7: Bereitstellen eines zuvor ermittelten, von einer Konfiguration der Fahrzeugkombination 1 und/oder von einer Fahrsituation abhängigen maximal zulässigen Wertes der Soll-Verzögerung zur Berücksichtigung im weiteren Verfahrensablauf, wenn der Wert der Soll-Verzögerung innerhalb eines maximal zulässigen Wertebereiches liegt.
- Schritt S8: Anweisen des Getriebesteuergeräts 7, eine Fahrkupplung im Antriebsstrang des Zugfahrzeugs 2 auszukuppeln,
   oder Anweisen des Getriebesteuergeräts 7, einen Reibungsbremsvorgang durch Steuern und Variieren einer Getriebeübersetzung zu unterstützen.
- Schritt S9: Ansteuern eines ersten elektronischen Bremsventils 18 und bei Bedarf eines zweiten elektronischen Bremsventils 31 und bei Bedarf eines Anhängersteuerventils 2 zur Erzeugung eines Bremsdrucks zur Betätigung wenigstens einer Reibungsbremsanlage 14 des Zugfahrzeugs 2 sowie gegebenenfalls einer Reibungsbremsanlage 22 des Anbaugeräts 3 oder Anhängefahrzeugs mittels des Bremssteuergeräts 5 derart,
   dass die Fahrzeugkombination 1 mit einem Verzögerungswert abgebremst wird, welcher maximal so groß ist wie die Differenz aus dem Wert der Soll-Verzögerung und dem Wert der Ist-Geschwindigkeitsänderung, wobei der maximal zulässige Wert der Soll-Verzögerung berücksichtigt wird.
- Schritt S10: Senden eines Bremsdruckmesswertes eines ersten Drucksensors 24 und gegebenenfalls eines Bremsdruckmesswertes eines zweiten Drucksensors 31 an das Bremssteuergerät 5.
- Schritt S11: Überwachen des Bremsdrucks.
- Schritt S12: Senden von Drehzahlsignalen von wenigstens zwei Raddrehzahlsensoren 12a, 12b, 13a, 13b an das Bremssteuergerät 5.
- Schritt S13: Berechnen der aktuellen Ist-Geschwindigkeit und der aktuellen Ist-Geschwindigkeitsänderung der Fahrzeugkombination 1 aus den empfangenen Drehzahlsignalen im Bremssteuergerät 5.
- Schritt S14: Berechnen der Differenz zwischen dem Wert der Soll-Verzögerung und dem Wert der Ist-Geschwindigkeitsänderung im Bremssteuergerät 5.
- Schritt S15: Anpassen des Bremsdrucks zur Minimierung der Differenz zwischen dem Wert der Soll-Verzögerung und dem Wert der Ist-Geschwindigkeitsänderung im Bremssteuergerät 5 und dabei Überwachen des Bremsdrucks.
- Schritt S16: Weiterleiten des Abbremsbefehls an Schritt S18, wenn die Fahrgeschwindigkeit gleich Null ist, andernfalls weiter mit Schritt S17.
- Schritt S17: Überprüfen, ob ein zeitlich neuer oder ein anderer Abbremsbefehl verfügbar ist, und wenn dies der Fall ist, dann zurück zu Schritt S6, andernfalls weiter mit Schritt S12.
- Schritt 18: Aktivieren einer Feststellbremse.
- Schritt 19: Beenden des Verfahrens.

Durch diese Verfahrensschritte wird bei einer erkannten Betriebssituation, welche ein Abbremsen der Fahrzeugkombination 1 erfordert, ein automatischer Bremsvorgang mittels der angesteuerten Reibungsbremsen 14, 14a, 14b, 22 durchgeführt. Der Fahrer kann durch Betätigen des Bremspedals mittels des Fußbremsventils 19 den Abbremsvorgang übersteuern. Insbesondere kann der Fahrer in einer Notbremssituation durch Betätigen des Bremspedals den automatischen Bremsvorgang noch verstärken. In einem regulären Betrieb mit dem Anbaugerät 3 ist auch eine Weiterbildung der Steuerung möglich, bei welcher der Fahrer einen automatischen Bremsvorgang unterbrechen oder aufheben kann. Dies ist jedoch im vorliegenden Beispiel nicht relevant und daher nicht vorgesehen.

In erwähnten Schritt S8 werden die aktuelle Ist-Geschwindigkeit und die aktuelle Ist-Geschwindigkeitsänderung der Fahrzeugkombination 1 aus den empfangenen Drehzahlsignalen im Bremssteuergerät 5 berechnet. Mit den Begriffen "Verzögerung" oder "Abbremsung" ist eine negative Geschwindigkeitsänderung gemeint. Der Begriff "Beschleunigung" steht für eine positive Geschwindigkeitsänderung. Dementsprechend werden hier Verzögerungen der Fahrzeugkombination 1 negative Werte der Geschwindigkeitsänderung und Beschleunigungen der Fahrzeugkombination 1 positive Werte der Geschwindigkeitsänderung zugewiesen.

Der im erwähnten Schritt S7 mittels des Abbremsbefehls empfangene Wert der Soll-Verzögerung kann im weiteren Verlauf angepasst werden, um einen für ein sicheres Anhalten maximal zulässigen Wert der Soll-Verzögerung nicht zu überschreiten. Nach dem Erkennen einer Nothalt-Situation darf die Fahrzeugkombination 1 nicht mit einer beliebig hohen Fahrzeugverzögerung angehalten werden. Die Soll-Verzögerung der Fahrzeugkombination darf nämlich nicht so hoch sein, dass sich der Fahrer bei einem abrupten Abbremsvorgang eine Verletzung zuzieht oder die Fahrzeugkombination 1 in eine die Fahrsicherheit beeinträchtigende Fahrsituation gelangt. Daher kann im einfachsten Falle ein vergleichsweise niedrigerer Wert der Soll-Verzögerung zur Nutzung für den weiteren Verfahrensablauf bestimmt und im Bremssteuergerät abgespeichert werden. Dies hat möglicherweise einen vergleichsweise langen Anhaltweg zur Folge. Der Vorteil einer erhöhten Fahrsicherheit sowie eines Schutzes vor Verletzungen des Fahrzeugführers überwiegt jedoch. Um den Wert einer maximal zulässigen Soll-Verzögerung zu ermitteln, können abgespeicherte Daten über die Fahrzeugkonfiguration, wie Art der Zugmaschine und des angekoppelten Anbaugeräts oder Anhängefahrzeugs, das Gesamtgewicht der Fahrzeugkombination 1 und/oder die Anzahl der abbremsbaren Fahrzeugachsen herangezogen werden.

Außerdem kann die aktuelle Fahrsituation berücksichtigt werden. Demnach wird der Bremsdruck beim Befahren einer Fahrstrecke bergab ein anderer sein als beim Befahren einer Fahrstrecke bergauf. Dies wird bei der Ansteuerung des ersten elektronischen Bremsventils 18 und gegebenenfalls des zweiten elektronischen Bremsventils 31 beziehungsweise des Anhängersteuerventils 23 zur Erzeugung des Bremsdrucks berücksichtigt.

Weiter kann der Wert der maximal zulässigen Soll-Verzögerung zur Verhinderung einer Umkippneigung berücksichtigen, ob sich die Fahrzeugkombination auf einer zumindest weitgehend horizontalen Fahrstrecke oder quer zu einem Hang oder Gefälle bewegt.

Es wird zudem als vorteilhaft erachtet, wenn der Soll-Verzögerungswert bei jedem Verfahrenszyklus neu berechnet wird, denn ein während der Fahrt ablaufender Beladevorgang oder Entladevorgang verändert die Gesamtmasse der Fahrzeugkombination und daher auch den Verzögerungsbedarf bei einem Notabbremsvorgang.

Beispielsweise wird im erwähnten Schritt S7 in einer Nothaltsituation eine erforderliche Soll-Verzögerung von -6 m/s² abgeschätzt oder anderweitig berechnet, um die Fahrzeugkombination 1 in kürzester Zeit und mit dem geringsten Bremsweg zum Stehen zu bringen. Allerdings wird aus Gründen der Fahrsicherheit eine maximal zulässige Soll-Verzögerung von -5 m/s² ermittelt. Aufgrund der maximal zulässigen Soll-Verzögerung von -5 m/s² wird mit Schritt 9 die Reibungsbremsanlage 14 dann derart angesteuert, dass die Fahrzeugkombination 1 mit einem Verzögerungswert von -5 m/s², also dem maximal zulässigen Verzögerungswert, abgebremst wird. Wäre die abgeschätzte Soll-Verzögerung in einer anderen Betriebssituation kleiner als die maximal zulässige Soll-Verzögerung, könnte sich in Schritt S9 eine sanftere Abbremsung, also mit einem Verzögerungswert unterhalb des maximal zulässigen Wertes ergeben.

### Bezugszeichen (Teil der Beschreibung)

- 1: Fahrzeugkombination
- 2: Zugfahrzeug, Traktor
- 3: Anbaugerät, Anhängefahrzeug
- 4: Bremssteuersystem
- 5: Bremssteuergerät
- 6: Motorsteuergerät
- 7: Getriebesteuergerät
- 8: Traktorsteuergerät
- 9: Anbaugerät-Steuergerät
- 10: Hinterachse
- 10a: Erstes Hinterachsrad
- 10b: Zweites Hinterachsrad
- 11: Vorderachse
- 11a: Erstes Vorderachsrad
- 11b: Zweites Vorderachsrad
- 12a: Erster Raddrehzahlsensor, erstes Sensormittel
- 12b: Zweiter Raddrehzahlsensor, erstes Sensormittel
- 13a: Dritter Raddrehzahlsensor, erstes Sensormittel
- 13b: Vierter Raddrehzahlsensor, erstes Sensormittel
- 14: Reibungsbremsanlage des Zugfahrzeugs
- 14a: Erste Reibungsbremse
- 14b: Zweite Reibungsbremse
- 15: CAN-Datenbus
- 16: ISOBUS
- 17: Erster hydraulischer Bremskreis
- 18: Erstes elektronisches Bremsventil
- 19: Fußbremsventil
- 20: Speicherladeventil
- 21: Hydraulikpumpe
- 22: Reibungsbremsanlage des Anbaugeräts bzw. Anhängefahrzeugs
- 22a: Luftkompressor
- 22b: Drucklufttank
- 22c: Vorratsdruck-Kupplungskopf
- 22d: Steuerdruck-Kupplungskopf
- 23: Anhängersteuerventil
- 24: Erster Drucksensor
- 25: Erster hydraulischer Druckspeicher
- 26: Umgebungsdetektor, zweites Sensormittel
- 27: Steuerleitung vom Anbaugerät-Steuergerät zum Bremssteuergerät
- 30: Zweiter hydraulischer Bremskreis
- 31: Zweites elektronisches Bremsventil
- 32: Zweiter Drucksensor
- 33: Zweiter hydraulischer Druckspeicher
- H1: Erste Hydraulikleitung
- H2: Zweite Hydraulikleitung
- H3: Dritte Hydraulikleitung
- H4: Vierte Hydraulikleitung
- H5: Fünfte Hydraulikleitung
- H6: Sechste Hydraulikleitung
- H7: Siebte Hydraulikleitung

## Patentansprüche

1. Verfahren zur Bremssteuerung einer Fahrzeugkombination (1), welche ein Zugfahrzeug (2) und ein an das Zugfahrzeug (2) angekoppeltes Anbaugerät (3) oder wenigstens ein Anhängefahrzeug umfasst, wobei die Fahrzeugkombination (1) ein elektronisches Bremssteuersystem (4) sowie erste Sensormittel (12a, 12b, 13a, 13b) zur Ermittlung der Fahrgeschwindigkeit aufweist, wobei zumindest das Zugfahrzeug (2) eine durch das Bremssteuersystem (4) ansteuerbare Reibungsbremsanlage (14) aufweist, und wobei zumindest das angekoppelte Anbaugerät (3) oder Anhängefahrzeug zweite Sensormittel (26) zur Erkennung eines Abbremsbedarfs der Fahrzeugkombination (1) und zur Signalisierung einer Abbremsanforderung aufweist, **dadurch gekennzeichnet, dass** eine signalisierte Abbremsanforderung direkt oder indirekt an das Bremssteuersystem (4) übermittelt wird, und dass die Fahrzeugkombination (1) durch das Bremssteuersystem (4) auf eine an das Bremssteuersystem (4) übermittelte Abbremsanforderung hin mittels einer Ansteuerung mindestens der Reibungsbremsanlage (14) des Zugfahrzeugs (2) automatisch abgebremst wird.

2. Verfahren nach Anspruch 1, **dadurch gekennzeichnet, dass** bei einer signalisierten und an das Bremssteuersystem (4) übermittelten Abbremsanforderung ein Zyklus mit mindestens folgenden Verfahrensschritten wenigstens einmal durchlaufen wird:
- Ermitteln der aktuellen Fahrgeschwindigkeit der Fahrzeugkombination (1),
- Ermitteln der Abweichung zwischen der angeforderten Abbremsung und einer aktuellen Abbremsung der Fahrzeugkombination (1),
- Unterbrechen oder Regeln einer Drehmomentübertragung im Antriebsstrang der Fahrzeugkombination (1),
- Erzeugen und Einstellen eines auf die Reibungsbremsen (14, 14a, 14b) mindestens einer Fahrzeugachse (10) des Zugfahrzeugs (2) wirkenden Bremsdrucks in Abhängigkeit von der ermittelten Abweichung zwischen der angeforderten und der aktuellen Abbremsung der Fahrzeugkombination (1), sowie
- Abbremsen der Fahrzeugkombination (1) bis zum Fahrzeugstillstand, oder zumindest bis erkannt wird, dass die der Abbremsanforderung zugrunde liegende Situation nicht mehr besteht.

3. Verfahren nach Anspruch 1 oder 2, **dadurch gekennzeichnet, dass** bei einer Abbremsung der Fahrzeugkombination (1) bis zum Fahrzeugstillstand bei festgestelltem Fahrzeugstillstand automatisch eine Feststellbremse betätigt wird.

4. Verfahren nach Anspruch einem der Ansprüche 1 bis 3, **dadurch gekennzeichnet, dass** die Fahrgeschwindigkeit sowie die Fahrgeschwindigkeitsänderung der Fahrzeugkombination (1) mithilfe von ersten Sensormitteln (12a, 12b, 13a, 13b) ermittelt wird, wozu verwendet werden mindestens zwei an einer Fahrzeugachse (10, 11) der Fahrzeugkombination (1) angeordnete Raddrehzahlsensoren, wenigstens ein Drehzahlsensor an einer Getriebewelle eines Fahrzeuggetriebes, wenigstens ein Fahrbeschleunigungssensor, wenigstens ein Bodenradarsensor und/oder ein Satellitennavigationssystem.

5. Verfahren nach einem der Ansprüche 1 bis 4, **dadurch gekennzeichnet, dass** zu Beginn einer automatischen Abbremsung der Fahrzeugkombination (1) ein akustisches und/oder optisches Warnsignal für einen Fahrzeugführer erzeugt wird, und/oder dass nach der Beendigung eines solchen automatischen Abbremsvorgangs ein Freigabesignal ausgegeben wird.

6. Verfahren nach einem der Ansprüche 1 bis 5, **dadurch gekennzeichnet, dass** bei einer Fahrzeugkombination (1) mit einem Anbaugerät (3) oder Anhängefahrzeug, welches eine eigene durch das Bremssteuersystem (4) ansteuerbare Anhänger-Reibungsbremsanlage (22) aufweist, bei einer signalisierten und an das Bremssteuersystem (4) übermittelten Abbremsanforderung zusätzlich die Anhängerreibungsbremsen aktiviert werden.

7. Verfahren nach einem der Ansprüche 1 bis 6, **dadurch gekennzeichnet, dass** bei einer Fahrzeugkombination (1) mit einem Zugfahrzeug (2), welches eigene Sensormittel zur Erkennung eines Abbremsbedarfs der Fahrzeugkombination (1) und zur Signalisierung einer Abbremsanforderung aufweist, eine Abbremsanforderung durch die Sensormittel des Zugfahrzeugs (2) und/oder oder durch die Sensormittel (26) des Anbaugeräts (3) oder Anhängefahrzeugs direkt oder indirekt an das Bremssteuersystem (4) übermittelt wird.

8. Verfahren nach einem der Ansprüche 1 bis 7, **dadurch gekennzeichnet, dass** eine Bremsanforderung des Anbaugeräts (3) oder Anhängefahrzeugs durch eine Bremsanforderung des Zugfahrzeugs (2) außer Kraft gesetzt wird, oder dass eine Bremsanforderung des Zugfahrzeugs (2) durch eine Bremsanforderung des Anbaugeräts (3) oder Anhängefahrzeugs außer Kraft gesetzt wird.

9. Verfahren nach einem der Ansprüche 1 bis 8, **gekennzeichnet durch** die folgenden Verfahrensschritte:
- Schritt S1: In einer Fahrzeugkombination (1) sind betriebsbereit ein Motorsteuergerät (6), ein Getriebesteuergerät (7), ein Traktorsteuergerät (8) und ein Bremssteuergerät (5) des Zugfahrzeugs (2) sowie ein Anbaugerät-Steuergerät (9), und das Bremssteuergerät (5) wartet auf einen Befehl vom Anbaugerät-Steuergerät (9).
- Schritt S2: Empfangen von Sensordaten eines Umgebungsdetektors (26) im Anbaugerät-Steuergerät (9).
- Schritt S3: Erkennen einer Nothalt-Situation durch das Anbaugerät-Steuergerät (9).
- Schritt S4a: Erzeugen eines Abbremsbefehls im Anbaugerät-Steuergerät (9) und Übermitteln des Abbremsbefehls an das Bremssteuergerät (5) über eine Steuerleitung (27) gemäß einem ersten Befehlsweg, oder
- Schritt S4b: Erzeugen eines Abbremsbefehls im Anbaugerät-Steuergerät (9) und Übermitteln des Abbremsbefehls über einen zweiten Befehlsweg mittels ISOBUS (16) an das Traktorsteuergerät (8) und von dort mittels CAN-Datenbus (15) an das Bremssteuergerät (5).
- Schritt S5: Empfangen des Abbremsbefehls im Bremssteuergerät (5).
- Schritt S6: Feststellen der Zulässigkeit des empfangenen Abbremsbefehls.
- Schritt S7: Bereitstellen eines zuvor ermittelten, von einer Konfiguration der Fahrzeugkombination (1) und/oder von einer Fahrsituation abhängigen maximal zulässigen Wertes der Soll-Verzögerung zur Berücksichtigung im weiteren Verfahrensablauf, wenn der Wert der Soll-Verzögerung innerhalb eines maximal zulässigen Wertebereiches liegt.
- Schritt S8: Anweisen des Getriebesteuergeräts (7), eine Fahrkupplung im Antriebsstrang des Zugfahrzeugs (2) auszukuppeln,
oder Anweisen des Getriebesteuergeräts (7), einen Reibungsbremsvorgang durch Steuern und Variieren einer Getriebeübersetzung zu unterstützen.
- Schritt S9: Ansteuern eines ersten elektronischen Bremsventils (18) und bei Bedarf eines zweiten elektronischen Bremsventils (31) und bei Bedarf eines Anhängersteuerventils (23) zur Erzeugung eines Bremsdrucks zur Betätigung wenigstens einer Reibungsbremsanlage (14) des Zugfahrzeugs (2) sowie gegebenenfalls einer Reibungsbremsanlage (22) des Anbaugeräts (3) oder Anhängefahrzeugs mittels des Bremssteuergeräts (5) derart,
dass die Fahrzeugkombination (1) mit einem Verzögerungswert abgebremst wird, welcher maximal so groß ist wie die Differenz aus dem Wert der Soll-Verzögerung und dem Wert der Ist-Geschwindigkeitsänderung, wobei der maximal zulässige Wert der Soll-Verzögerung berücksichtigt wird.
- Schritt S10: Senden eines Bremsdruckmesswertes eines ersten Drucksensors (24) und gegebenenfalls eines Bremsdruckmesswertes eines zweiten Drucksensors (31) an das Bremssteuergerät (5).
- Schritt S11: Überwachen des Bremsdrucks.
- Schritt S12: Senden von Drehzahlsignalen von wenigstens zwei Raddrehzahlsensoren (12a, 12b, 13a, 13b) an das Bremssteuergerät (5).
- Schritt S13: Berechnen der aktuellen Ist-Geschwindigkeit und der aktuellen Ist-Geschwindigkeitsänderung der Fahrzeugkombination (1) aus den empfangenen Drehzahlsignalen im Bremssteuergerät (5).
- Schritt S14: Berechnen der Differenz zwischen dem Wert der Soll-Verzögerung und dem Wert der Ist-Geschwindigkeitsänderung im Bremssteuergerät (5).
- Schritt S15: Anpassen des Bremsdrucks zur Minimierung der Differenz zwischen dem Wert der Soll-Verzögerung und dem Wert der Ist-Geschwindigkeitsänderung im Bremssteuergerät (5) und dabei Überwachen des Bremsdrucks.
- Schritt S16: Weiterleiten des Abbremsbefehls an Schritt S18, wenn die Fahrgeschwindigkeit gleich Null ist, andernfalls weiter mit Schritt S17.
- Schritt S17: Überprüfen, ob ein zeitlich neuer oder ein anderer Abbremsbefehl verfügbar ist, und wenn dies der Fall ist, dann zurück zu Schritt S6, andernfalls weiter mit Schritt S12.
- Schritt 18: Aktivieren einer Feststellbremse.
- Schritt 19: Beenden des Verfahrens.

10. Verfahren nach Anspruch 9, **dadurch gekennzeichnet, dass** bei der Ansteuerung eines ersten elektronischen Bremsventils (18) und bei Bedarf eines zweiten elektronischen Bremsventils (31) und bei Bedarf eines Anhängersteuerventils (23) zur Erzeugung eines Bremsdrucks berücksichtigt wird, ob die Fahrzeugkombination (1) eine Fahrstrecke bergauf oder bergab fährt, wobei der Bremsdruck bei einer Fahrt bergauf kleiner ist als bei einer Fahrt bergab.

11. Verfahren nach Anspruch 9, **dadurch gekennzeichnet, dass** bei der Ansteuerung eines ersten elektronischen Bremsventils (18) und bei Bedarf eines zweiten elektronischen Bremsventils (31) und bei Bedarf eines Anhängersteuerventils (23) zur Erzeugung eines Bremsdrucks die jeweils aktuelle Gesamtmasse der Fahrzeugkombination (1) berücksichtigt wird.

12. Verfahren nach Anspruch 9, **dadurch gekennzeichnet, dass** bei der Ansteuerung eines ersten elektronischen Bremsventils (18) und bei Bedarf eines zweiten elektronischen Bremsventils (31) und bei Bedarf eines Anhängersteuerventils (23) zur Erzeugung eines Bremsdrucks berücksichtigt wird, ob an dem Zugfahrzeug (2) ein Anbaugerät (3) angekoppelt ist, und um welches Anbaugerät (3) es sich dabei handelt.

13. Verfahren nach Anspruch 9, **dadurch gekennzeichnet, dass** bei der Ansteuerung eines ersten elektronischen Bremsventils (18) und bei Bedarf eines zweiten elektronischen Bremsventils (31) und bei Bedarf eines Anhängersteuerventils (23) zur Erzeugung eines Bremsdrucks berücksichtigt wird, ob an dem Zugfahrzeug (2) ein Anhängefahrzeug angekoppelt ist, und um welches Anhängefahrzeug es sich dabei handelt.

14. Verfahren nach Anspruch 9, **dadurch gekennzeichnet, dass** bei der Ermittlung eines maximal zulässigen Werts der Soll-Verzögerung berücksichtigt wird, ob die Fahrzeugkombination (1) quer zu einer Hangneigung fährt.

15. Verfahren nach Anspruch 9, **dadurch gekennzeichnet, dass** bei der Ermittlung eines maximal zulässigen Werts der Soll-Verzögerung berücksichtigt wird, ob an dem Zugfahrzeug (2) ein Anbaugerät (3) angekoppelt ist, und um welches Anbaugerät (3) es sich dabei handelt.

16. Verfahren nach Anspruch 9, **dadurch gekennzeichnet, dass** bei der Ermittlung eines maximal zulässigen Werts der Soll-Verzögerung berücksichtigt wird, ob an dem Zugfahrzeug (2) ein Anhängefahrzeug angekoppelt ist, und um welches Anhängefahrzeug es sich dabei handelt.

17. Elektronisches Bremssteuersystem (4) einer Fahrzeugkombination (1), welche ein Zugfahrzeug (2) und ein an das Zugfahrzeug (2) angekoppeltes Anbaugerät (3) und/oder wenigstens ein Anhängefahrzeug umfasst, wobei das Bremssteuersystem (4) Sensor- und Steuermittel (12a, 12b, 13a, 13b, 26) zur Ermittlung der Fahrgeschwindigkeit sowie zur Ermittlung einer Anforderung zum Abbremsen der Fahrzeugkombination (1) und zur automatischen Ansteuerung einer Reibungsbremsanlage (14) des Zugfahrzeugs (2) und/oder des angekoppelten Anbaugeräts (3) oder Anhängefahrzeugs aufweist.

18. Fahrzeugkombination (1), aufweisend einen landwirtschaftlichen Traktor (2) mit einem Anbaugerät (3) und/oder wenigstens einem Anhängefahrzeug oder aufweisend ein anderes Nutzfahrzeug für die Verwendung abseits von Straßen, mit einem elektronischen Bremssteuersystem (4), welches gemäß dem Vorrichtungsanspruch aufgebaut und zur Durchführung eines Verfahrens nach einem der Verfahrensansprüche betreibbar ist.
